# EUROPEAN PATENT APPLICATION

(11) **EP 2 085 625 A2**
(43) Date of publication of application: **05.08.2009**
(21) Application number: 09151248.3
(22) Date of filing: 23.01.2009
(51) Int. Cl.: F16C 11/06

(54) **Bi-directiional strut end for ball stud mounted devices**

(30) Priority: 01.02.2008 US 12505
(71) Applicant: Delphi Technologies, Inc., Troy, Michigan 48007 (US)
(72) Inventor: Kuhlman, Howard Warren, Rochester Hills, MI 48306 (US)
(74) Representative: Manitz, Finsterwald & Partner GbR

(57) **Abstract**

A ball and socket joint connector (12,112) is provided at opposing ends of a strut (10), the connector (12,112) includes a socket body (16,116) having an interior chamber (44,144) and a ball stud including a ball end (20,120) movable within and relative to the interior chamber (44,144). The ball end (20,120) is connected to a stud base (26,126). The socket body (16,116) includes sidewall (56,58,156,158) extensions to limit movement of the ball in a first direction (Y) and prohibiting movement of the ball stud (14,114) in a second direction (X) perpendicular to the first direction. A retainer (18,118) secures the ball end (20,120) within the interior chamber (44,144) preventing fore and aft movement of the ball stud (14,114) but allowing rotation movement of the ball end (20,120) within the chamber (44,144).

## Description

### TECHNICAL FIELD

The invention relates generally to a ball and socket assembly operably connected to a strut device for limiting the strut device to bi-directional movement.

### BACKGROUND OF THE INVENTION

Certain strut devices such as jackscrews are commonly used to activate various mechanisms on a vehicle such as door lift mechanisms and door latch mechanism. A typical jackscrew includes a nut threadably movable along an elongate screw. The screw engages the nut to drive the nut in a driven direction along the screw. The jackscrew also includes a spring connected between the jackscrew and the stationary component. As the nut moves, a built-up force is exerted on the spring to return to its home position.

In operation a jackscrew may be used as a strut to facilitate the opening and closing of a door lift or door latch mechanism. In such environment, to function properly, the end connections for the jackscrew or similar strut require uni-rotational control in one of the three axes. A typical ball socket mounting device is multi-directional. Therefore, to use the typical ball socket for a ball stud mounting device as an end connection, an anti rotational feature about the axis of the jackscrew must be added.

It would be desirable to provide a ball stud mounting device as an end connection for a strut, such as a jackscrew, providing rotational control and which is configured to eliminate any clicking noises as a result of the change in rotational direction.

### SUMMARY OF THE INVENTION

A bi-directional strut end is disclosed having a socket with an interior chamber and a ball stud including a ball end and a cylindrical ball stud base. A retainer is provided for retaining the ball end in the interior chamber so that the ball end is rotatable within the interior chamber but is prevented from fore and aft movement of the ball stud. Means is provided on the socket body for limiting arcuate movement of the ball stud in a first direction. Means are also provided on at least one of the socket body and retainer for preventing arcuate movement of the ball stud in a second direction wherein the second direction traverses the first direction.

In another aspect of the invention, the means formed on the socket for limiting arcuate movement of the ball stud in the first direction includes an elongate access opening having spaced arcuate opposing walls. The spaced arcuate opposing walls extend adjacent the cylindrical ball stud base.

In another aspect of the invention, the means formed on the socket for preventing arcuate movement of the ball stud in a second direction includes a pair of opposing parallel walls spaced for providing close, surface-to-surface contact between the ball stud base and the wall surfaces when the ball end is positioned within the interior chamber.

In yet another aspect of the invention the socket body accommodates a conventional ball stud having a conical neck extending between the ball end and opposing end and a retainer is transversely mountable in the socket body. The retainer has side legs extending from an end wall with projections carried on the side legs. The projections cooperate with locking tabs on the exterior walls of the socket body for placing the retainer in a first position or second position relative to the socket body.

In another aspect of the invention side arms also extend from the end wall and cooperate with the interior surfaces of the sidewalls of the socket body to provide close, surface-to-surface contact between the conical neck of the ball stud and the side arms of the retainer when the retainer is in the second position.

Other applications of the present invention will become apparent to those skilled in the art when the following description of the best mode contemplated for practicing

### BRIEF DESCRIPTION OF THE DRAWINGS

The description herein makes reference to the accompanying drawings wherein like reference numerals refer to like parts throughout the several views, and wherein:

Figure 1 is an elevational view of a jackscrew having a ball stud mounting device attached at each end;

Figure 2 is a perspective view of the ball stud mounting device receiving a ball stud;

Figure 3 is a front perspective view of the ball stud mounting device.

Figure 4 is a sectional view of the ball stud mounting device taken along lines 4-4 in Figure 3, mounted to a ball stud;

Figure 5 is a sectional view of the ball stud mounting device taken along lines 5-5 in Figure 3 mounted to a ball stud;

Figure 6 is a perspective view of a conventional ball stud;

Figure 7 is a perspective view of the ball stud mounting device according to the second embodiment

Figure 8 is a front view of the ball stud mounting device shown in Figure 7;

Figure 9 is a perspective view of a retainer according to the second embodiment;

Figure 10 is a perspective view of the ball stud mounting device shown in Figure 7 with the retainer in a first position;

Figure 11 is a perspective view of the combination ball stud mounting device shown in Figure 7, and a ball stud with the retainer in a second position;

Figure 12 is a sectional view of the ball stud mounting device and the ball stud taken along lines 12-12 in Figure 11; and

Figure 13 is a sectional view of the ball stud mounting device and the ball stud taken along lines 13-13 in Figure 11.

### DESCRIPTION OF THE PREFERRED EMBODIMENTS

A jackscrew 10 can be used as a strut to activate mechanisms such as vehicular lids, door latch components and other movable members, which to move efficiently require the advantages of a jackscrew. A conventional jackscrew 10 includes a nut (not shown) supported for reciprocal translational movement and against rotational movement. A connector 12 is adapted to connect each end of the jackscrew device 10 to the appropriate components of the vehicle for accomplishing the raising and lowering of vehicular lids etc. so that certain radial motion of jackscrew is restricted.

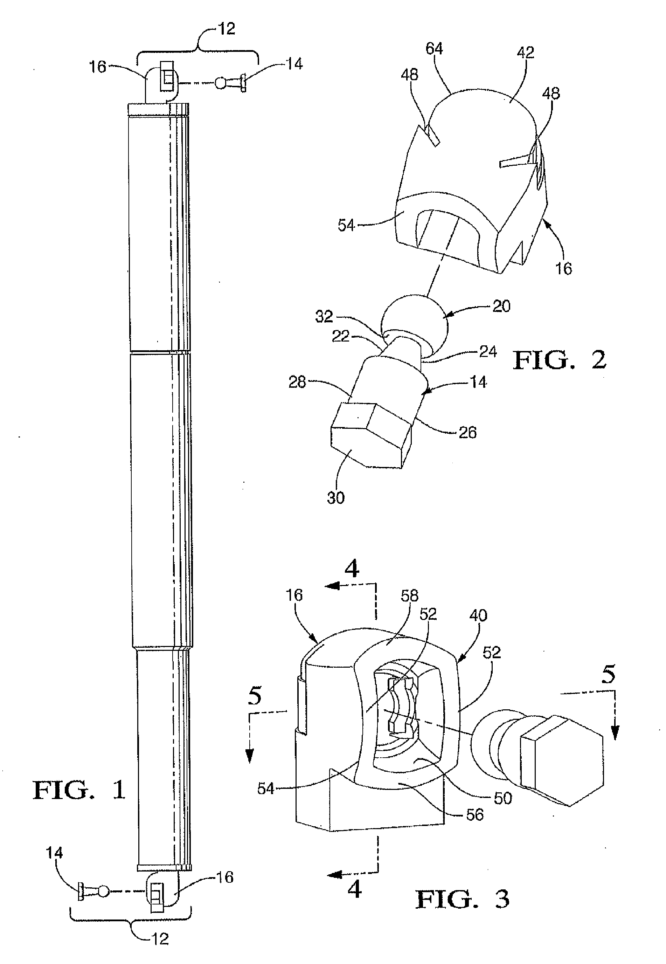

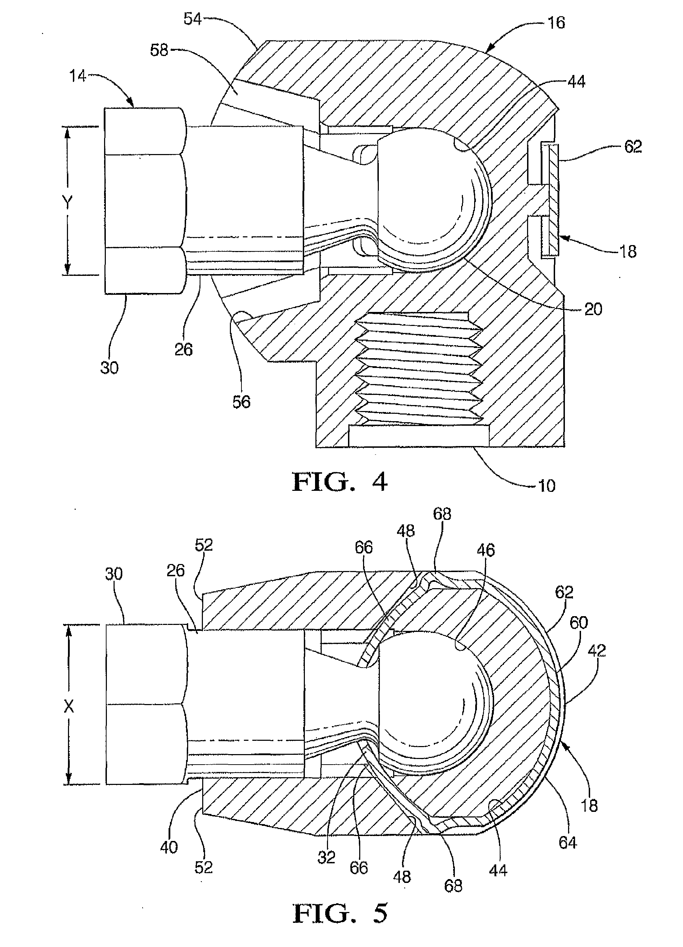

In the present invention as shown in Figures 1-5, the connector 12 includes a ball stud 14 mounted at an appropriate location in a vehicle and a ball stud mounting device or ball socket 16 secured to each end of the jackscrew 10. The jackscrew 10 may be threadably secured to the ball socket 16, as shown in Figure 4 for example. The connector 12 also includes a retainer 18 for maintaining connection of the ball socket 16 to the ball stud 14. The inherent movement of a jackscrew require that certain relative movement of a socket connector 12 be restricted or prevented. The improved configuration of ball socket connector 12 as disclosed herein remedies some of these concerns.

In a first embodiment, the ball stud 14 is configured having a spherically shaped ball end 20 with a conical shaped neck portion 22 with the smaller diametrical end portion 24 of the neck 22 attached to the ball end 20. A larger diametrical portion of the neck 22 is attached to a ball stud base 26 at the opposing end. The ball stud base 26 is cylindrical having essentially the same diametric dimension as the spherical ball end 20. At the distal end 28 of the ball stud base 26 and opposite the ball end 20, the base 26 may have an external threaded portion (not shown) designed and adapted for receiving a fastener 30, such as a screw, for fastening to a vehicle or vehicle component in a conventional manner. The end of the ball 20 adjacent to the small diametrical portion 24 of the conical neck 22, forms a transverse shoulder 32 which engages with a retaining means 18 for maintaining the ball stud 14 within the ball socket body 16.

The ball socket body 16 has a first end 40 and a second end 42. A central axis extends between ends 40 and 42. An internal chamber 44 within the ball socket body 16 is located adjacent the second end 42. The internal chamber 44 has an interior surface 46 having a semi-circular configuration and designed for receiving and holding the ball end 20 of the ball stud 14 in a surface-to-surface contact between the spherical surface of the ball end 20 and the semi-spherical surface 46 of the interior chamber 44. A pair of side slots 48 are angularly cut through side portions the ball socket body 16 and are configured for receiving ends of a retaining means 18 as will be discussed hereinafter.

Access into the interior chamber 46 of the ball socket 16 is provided by an access slot 50 in the first end 40 of the socket body 16 which communicates to the interior chamber 46. The slot 50 is formed by a pair of opposing side parallel extending walls 52 shaped and spaced from each other to provide close surface-surface contact between the cylindrical ball stud base 26 and the inner surfaces of the side planar wall 52. This configuration of the parallel walls 52 and the close surface contact of the cylindrical ball stud base 26 with the walls 52 prevent lateral movement of the jackscrew 10 in an "X" direction, as shown in Figure 5, and avoid rattling noises.

The access slot 50 is further defined by an arcuate bottom wall 56 and an arcuate upper wall 58, both extending from the front face 54 of the socket body 16. The arcuate bottom and upper walls 56, 58 respectively allow limited lateral movement therebetween of the socket body 16 and the connected jackscrew 10 in the "Y" direction relative to the ball stud 14, as shown in Figure 4.

Once the ball stud 14 is inserted within the interior chamber 44 of the ball socket 16 so that the ball end 20 contacts the interior back surface 46, the retaining means 18 in the form of a retaining spring clip 60 can be inserted for retaining the ball end 20 within the interior chamber 42. The retaining spring clip 60 is a resilient band having an arcuate center portion 62 for placement around the arcuate back surface 64 of the ball socket 16. Angular side slots 48 extend through the socket body to provide access to the ball stud 14 by the retaining spring clip 60. The angularly side slots 48 in the ball socket 16 are sized and shaped for each receiving an angular clip end portion 66 of the retaining spring clip 60. The clip end portions 66 pass through the pair of side slots 48 and grip the shoulder edge 32 of the ball end 20. An undulation 68 formed along each side of the retaining spring clip 60 retains the end portions 66 within the side slots 48. The retaining spring clip 60 is biased to maintain the clip end portions 66 behind the ball end 20 to prevent removal of the ball stud 14 from the ball socket 16. The clip end portions 66 of the retaining spring clip 60 also prevent fore and aft movement of the ball stud 14 within the interior chamber 44, while allowing rotational movement of the ball end 20 about its axis.

When the jackscrew 10 or other similar strut with the ball stud mounting device 16 is connected to the ball stud 14, the jackscrew 10 is prevented from movement in the "X" direction by the extending walls 52. Movement of the jackscrew 10 is limited in the "Y" direction by the spacing between the arcuate bottom and upper walls 56, 58. The retaining spring clip 60 prevents fore and aft movement of the inserted ball stud 16, and thereby the ball stud mounting device 16 allows only bi-directional movement of the strut or jackscrew 10.

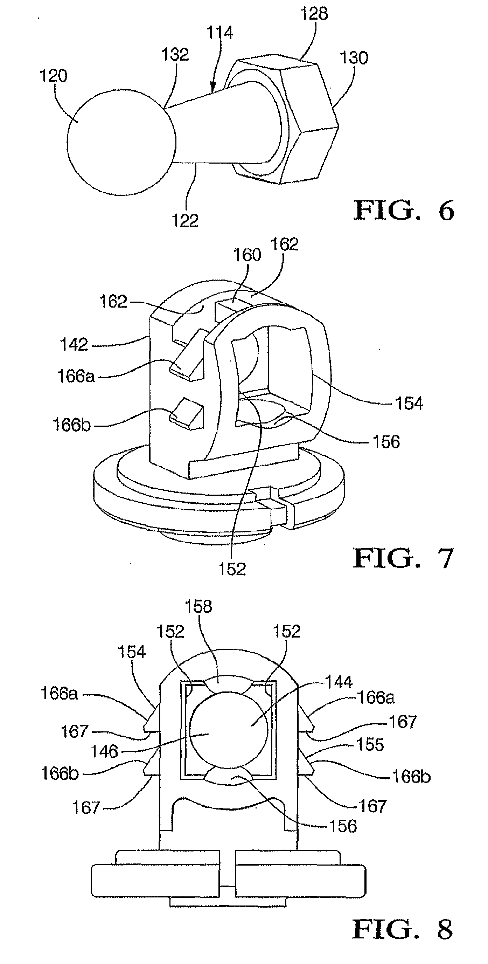

Looking at Figures 6-13, the connector 112 includes a ball stud mounting device or socket body 116 and a ball stud 114. The ball stud mounting device 116 of the second embodiment is configured for receiving a conventional ball stud 114. The conventional ball stud 114 has a central longitudinal axis and includes a first end that has at least a partially spherical shaped ball 120 thereon. The opposing end 128 of the ball stud may provide an externally threaded portion (not shown) designed and adapted to be fastened, such as by a nut 130 to a vehicle component in a conventional manner. The ball stud 114 includes a conical neck portion 122 extending between the ball 120 and the opposing end 128. A transversed shoulder 132 defines the end of the ball 120 and the beginning of the neck portion 122.

The ball stud mounting device includes a socket body 116 having a first end 140, a second end 142, and a central longitudinal axis which extends between the first and second ends, 140, 142. An internal cavity chamber 144 is molded in the body adjacent the second end 142. The wall 146 defining the internal chamber 144 has a generally semi-spherical shape or configuration. The chamber 144 is designed and intended to receive and snugly hold the spherically shaped ball end 120 allowing rotational movement of the ball socket 116 about its axis. The socket body 116 is configured for receiving a retainer 118 as will be discussed hereinafter.

An access slot 150 is formed in the first end 140 of the socket body 116 to permit access for the ball stud 114 into the interior chamber 144. The plane of the longitudinal center line of the access slot 150 is coaxial with the longitudinal axis of the socket body 116.

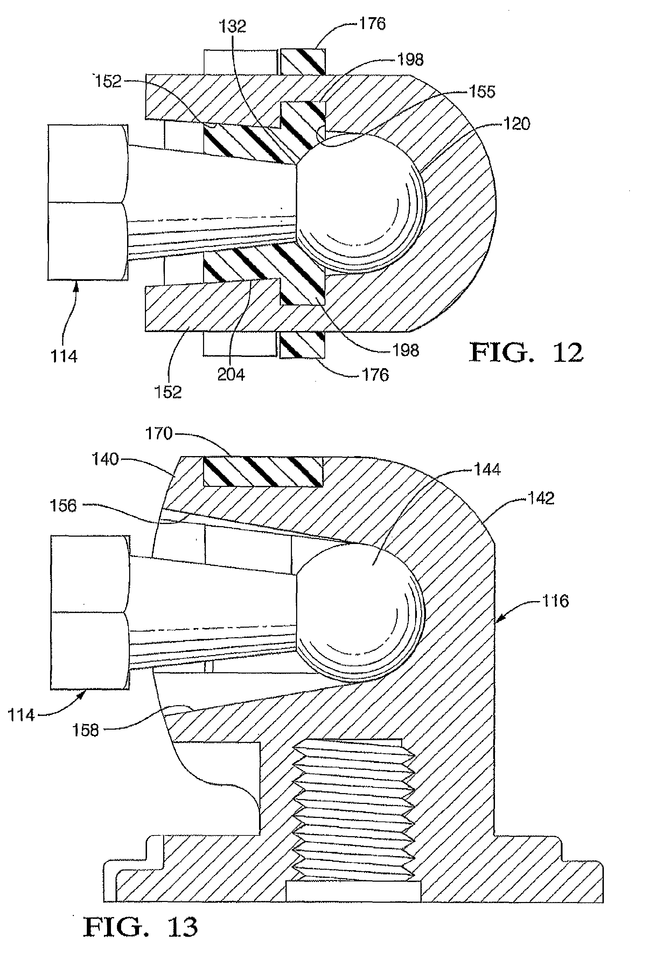

The access slot 150 is defined by a pair of planar sidewalls 152 spaced apart by a predetermined dimension. The sidewalls 152 begin at the front face 154 of the socket 116 and terminate at a backwall 155. The backwall 155 has a centrally located opening to the internal chamber 144. The access slot 150 is further defined by an arcuate bottom wall 156 extending from the front face 154 to the backwall 155; and an upper arcuate wall 158 extending to a midpoint between the front face 154 and the backwall 155. An arcuate bridge member 160 is recessed from the upper wall 158 and extends the remaining distance from the arcuate upper wall 158 to the backwall 155. The spacing of the arcuate bottom and upper walls 156, 158 limit the movement of the ball socket body 116 relative to the ball stud 114 in the "Y" direction (Figure 13).

An aperture 162 is formed respectively on each side of the bridge member 160 in the socket body 116. The apertures 162 are aligned to form a transverse opening extending through the upper wall 158 for access into the open slot 150. The apertures 162 extend adjacent a portion of the sidewalls 152 and the backwall 155.

On the outer surface of each sidewall 152 and adjacent the first end 140 are a pair of outwardly extending lock tabs 166a, 166b vertically spaced from each other. The spacing between the outwardly extending locking tabs 166a, 166b is predetermined for receiving a portion of the retainer 118 in the first or shipping position before final installation.

The retaining means 118 is formed of a one-piece body 170 of a suitable plastic having an endwall 172 formed of a generally curved or arcuate shape and first and second spaced side legs 174 extending therefrom. The side legs 174 extend generally parallel to each other from opposite ends of the endwall 172. Further, each side leg 174 has an end portion or projection 176 extending perpendicular to the side legs 174 to form a generally L-shaped configuration when viewed from one end. The projection 176 engage within the space between the pair of outwardly extending lock tabs 166a, 166b to position the retaining means 118 in the first or shipping position, or in the second and fully inserted, latched position when the L-shaped projections 176 are positioned below the lower tab 166b.

The configuration of the projection 176 has parallel inner and outer surfaces 180,182. The inner surfaces 180 are shorter than the outer surfaces 182 so that the first end surface 184 which is contiguously integral with the inner and outer surfaces 180,182, angles outwardly toward the outer surfaces 182. The opposing contiguously integral opposing end surface 186 is perpendicular to the inner and outer surfaces 180,182. The configuration of the L-shaped end leg projections 176 complements the lock tabs 166a, 166b on the socket body 116 so that the pull out of the retainer 118 from the socket body 116 is resisted by the opposing end surface 186 against the perpendicular edge 167 of the tabs 166a or 166b.

The retaining means 118 further includes a radially flange receiving means which is preferably carried as an integral column of the retainer 116. The radial flange receiving means includes first and second depending arms 190,192 which extend from an the inner surface of the endwall 172 of the retainer 118 which is defined as an inverted U-shaped slot 194 formed on the inner surface between the arms 190,192. The U-shaped slot 194 is sized to snugly conform over the bridge 160 adjacent to the upper wall 158 of the socket body so that when the retainer 118 is in the second position, the upper surface of the first end 172 corresponds with the upper surface of the upper wall 158. The arms 190, 192 each have inner surfaces 200, 202 which complement the neck 122 of the ball stud 114. The inner surfaces 200,202 have an arcuate and tapered surface to accommodate the curvature and taper of the conical neck 122. The arms 190, 192 each have outer surfaces 204 which complement the inner surfaces of the sidewalls 152. Therefore, the retainer arms 190, 192 and the sidewalls 152 of the socket body 116 cooperate to form a close surface-to-surface contact between the ball stud 114 and the retainer 118 and socket body 116 to prevent movement in the "X" direction. A flange 198 extends perpendicular along a rear edge of each arm 190, 192 which abuts the back wall 155 to prevent fore and aft movement of the ball stud 114 relative to the interior chamber 144 of the socket body 116.

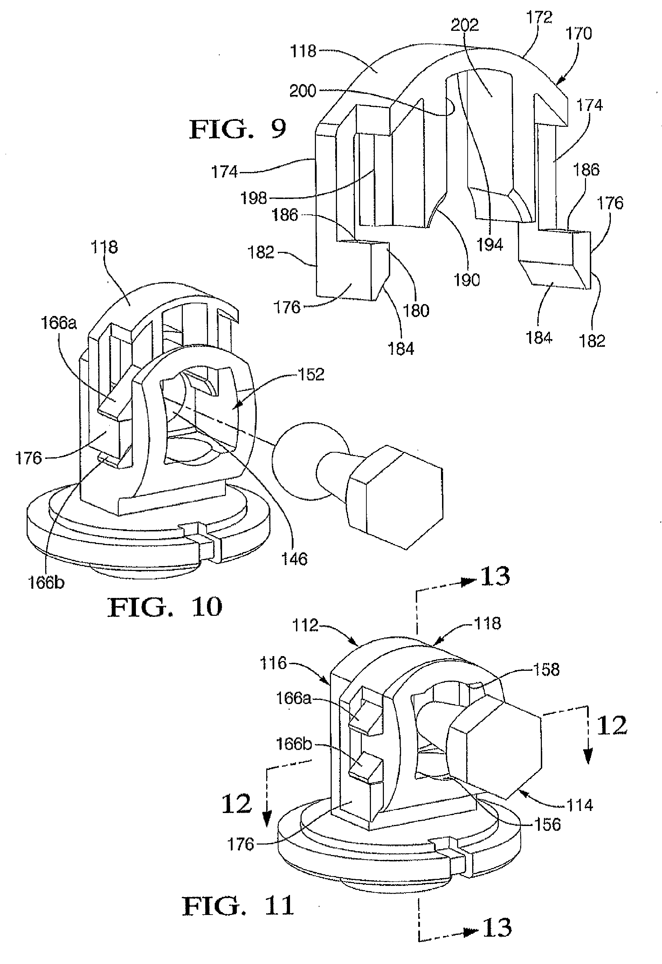

The retainer 118 can be first installed on the socket body 116 in a shipping or first position. In the first position, as shown in Figure 10, the L-shaped projections 176 of the legs 174 snaps into and engage between the upper and lower tabs 166a, 166b.of the socket body 116. In the first position, the socket body 116 can be inserted on a ball stud 114 for placement of the ball end 120 within the interior chamber 144.

Once the socket body 116 and the accompanying jackscrew 10 or strut is installed on the ball stud 114, further insertion of the retainer 118 through the aligned apertures 162 in the socket body 116 causes first end surface 184 of the L-shaped end 176 to ride along the angular surface of the lower tabs 166b until the opposing end surface 186 clears the perpendicular ledge surface 167 of lower tabs 166b. The ledge surface 167 prevents inadvertent removal of the retainer 118 from the socket body 116.

When the retainer 118 is fully seated on the socket body 116, the arms 190,192 are in close contact with the planar sidewalls 152 of the socket body 116 so that the inner surfaces 200,202 of the arms 190,192 hug the conical neck 122 of the ball stud 114 to provide close surface-to-surface contact between the neck 122 of the ball stud 114. The inner surfaces 200,202 of the arms 190,192, in cooperation with the extended sidewalls 152 of the socket body prevent side-to-side movement of the socket body in the "X" direction relative to the ball stud 114 to avoid rattling noises. The extending flanges 198 of the first and second arms 190,192 brace the backwall 155 and hug the transverse shoulder 132 of the ball to cooperate with the arms 190,192 in cooperation with the extended sidewalls 152 of the socket body to prevent fore-and-aft movement of the ball stud 114 relative to the socket body 116. As a result the ball socket connector 112 allows only bi-directional movement of the ball socket and its associated strut relative to the ball stud 114.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A bi-directional strut end comprising:
a socket body (16,116) having an interior chamber (44,144) secured to the strut end (10);
a ball stud (14,114) including a ball end (20,120) and a ball stud base (26,126);
a retainer (18,118) for retaining the ball end (20,120) in the interior chamber (44,144), said ball end (20,120) rotatable within the interior chamber (44,144);
means formed on the socket (56,58, 156, 158) for limiting arcuate movement of the ball stud in a first direction; and
means formed on one of the socket (52, 152) and the retaining means (190, 192) for preventing arcuate movement of the ball stud in a second direction, wherein the second direction traverses the first direction.

2. The strut end of claim 1, wherein the means formed on the socket body for limiting arcuate movement of the ball stud in the first direction includes an elongate opening (50, 150) having spaced arcuate opposing walls, (56,58, 156,158) said spaced arcuate opposing walls extending adjacent the ball stud base.

3. The strut end of claim 2, wherein the arcuate opposing walls are spaced for forming the elongate open slot (50, 150) therebetween, said open slot (50, 150) communicating with the interior chamber (44, 144).

4. The strut end of claim 1, wherein the ball stud has a cylindrical base (26) and wherein the means formed on one of the socket body (16) and the retainer (18) for preventing arcuate movement of the ball stud (14) in the second direction relative to the socket includes a pair of opposing parallel walls (52) spaced for providing close, surface-to-surface contact between the cylindrical surface of the ball stud base (26) and the surface of the parallel walls.

5. The strut end of claim 1, wherein the retainer (18) includes a retaining spring clip (60) having access to the ball end (20) through side apertures (48) in the socket body 16), said retaining spring clip (60) having end portions gripping the ball end (20) for preventing fore and aft movement of the ball stud in the interior chamber (44).

6. The strut end of claim 1, wherein the ball stud (14) has a cylindrical base (26), and the means formed in the socket body (16) for limiting arcuate movement of the ball stud (14) in the first direction (Y) within the interior chamber (144) includes an elongate opening (50) to the interior chamber (44) formed by spaced arcuate opposing walls (56,58) extending adjacent the ball stud base and the means formed in one of the socket and the retaining means for preventing arcuate movement of the ball stud in the second direction (X) relative to the socket body 16 includes a pair of opposing parallel walls (52) extending on the socket body (16) spaced for providing close, surface-to-surface contact between the cylindrical base (20) of the ball stud (14) and the surface of the parallel walls.

7. The strut end of claim 6, wherein the retainer (18) includes a retaining spring clip (60) having access to the ball end (20) through side apertures (48) in the socket body (16), the retaining spring clip (60) having end portions (60) biased against the ball end (20) for preventing fore and aft movement of the ball stud (14) in the interior chamber (44).

8. The strut end of claim 3 wherein the retainer (118) is transversely mountable in the socket body (116), the retainer (118) having a first position spaced from the open access slot (150) to the interior chamber (144) and a second position engaged with the ball stud (114).

9. The strut end of claim 8 wherein the retainer (118) comprises a pair of side legs (174) extending from a first end (172) and a projection (176) carried at the end of at least one leg.

10. The strut end of claim 9, wherein the retainer (118) further comprises a pair of side arms (190, 192) extending from the first end (172) and spaced inwardly from the pair of side legs (174), said pair of side arms (190,192) having a configuration for providing surface-to-surface contact with the base (126)of the ball stud (114) when in the second position.

11. The strut end of claim 9, wherein the socket body (116) comprises a pair of spaced sidewalls (152), each sidewall having at least one locking tab (166a, 166b).

12. The strut end of claim 11, wherein each of the spaced sidewalls (152) are disposed between the one of the pair of side legs (174) and side arms (190,192) when the retainer (118) is in the second position.

13. The strut end of claim 11, wherein the spaced sidewalls (152) each have a pair of spaced locking tabs (166a, 166b) axially aligned relative to each other.

14. The strut end of claim 13, wherein the retainer (118) is in the first position when the projections (176) is disposed between the pair of spaced locking tabs (166a, 166b).

15. The strut end of claim 10, wherein the retainer (118) further comprises flanges (198) extending from one end of the pair of arms (190,192).
